# EUROPEAN PATENT APPLICATION

(11) **EP 4 027 484 A2**
(43) Date of publication of application: **13.07.2022**
(21) Application number: 22151238.7
(22) Date of filing: 12.01.2022
(51) Int. Cl.: H02J 7/34, H02J 7/35, B60L 53/80

(54) **METHOD FOR CHARGING A BATTERY SYSTEM AND MOBILE CONSTRUCTION MACHINE**

(30) Priority: 12.01.2021 NL 1043906
(71) Applicant: Mobilis BV, 7323 BA Apeldoorn (NL)
(72) Inventor: RITZER-VAN DINTHER, Jeroen, 7323 BA Apeldoorn (NL)
(74) Representative: Simmons & Simmons

(57) **Abstract**

Method for charging a battery system, characterised in that the battery system is wholly or partially charged by means of electricity supplied and/or generated by a mobile power plant (5), the electricity preferably being generated by the mobile power plant wholly or partially from renewable energy sources (7, 8), such as solar and/or wind energy.

## Description

The present invention relates to a mobile construction machine, a method for charging a battery system, a mobile power plant and an apparatus for carrying out construction work.

More specifically, the invention concerns a mobile construction machine that comprises an electric motor, as well as a battery system for powering the electric motor.

Mobile construction machines belong to the group of "non-road mobile machinery". They are machines not intended for the transport of passengers or goods.

The use of mobile construction machines can have a negative impact on the environment. After all, mobile construction machines usually have an internal combustion engine which causes the emission of CO2 and/or other environmentally harmful substances. Furthermore, such machines are typically used in local areas, for example as part of a construction project, and can severely impact air quality in this local area and its immediate surroundings.

Attempts are being made to address this problem through the so-called "electrification" of mobile construction machines. This means that an electric motor rather than a combustion engine is used wholly or partially to drive the mobile construction machine. Since electric motors have few or no harmful emissions, their use can significantly improve air quality in the field of mobile construction machinery. However, as will be seen below, known techniques for using electric motors in mobile construction machines are impractical and inefficient.

It is known to power or drive the electric motor of a mobile construction machine by connecting it to the electricity grid by means of a supply cable. However, this solution is not very practical, as it significantly restricts the mobility of the mobile construction machine. In fact, this method of supplying power to the electric motor is only suitable for permanently or semi-permanently installed mobile construction machines.

Document US-9120651-B1 reveals an alternative method of powering the electric motor of a mobile construction machine. That document discloses a crane which includes a compartment housing a rechargeable battery system. This battery system is used to supply energy to the electric motor. No connection is required between the crane and the electricity grid, which means that the crane's mobility can be maintained. The battery system described in document US-9120651 is exchangeable, which means that the battery system can be replaced by, or exchanged with, another such battery system. It is therefore possible to replace the discharged battery system with another, charged battery system, after which the crane is operational again. Such a system saves a great deal of time compared to a fixed, non-exchangeable battery system permanently connected to the crane. After all, with the latter system, the crane is not, or hardly, operational during the charging process. However, the battery system described in US-9120651 is relatively cumbersome and the associated "toolless" mechanism for replacing the battery system is fairly complicated. This makes the replacement process time-consuming, which means that the crane will not be, or hardly be, operational for a considerable period of time. This is disadvantageous, certainly in the context of construction works.

The use of exchangeable battery systems is also known in other technical fields. For example, document US 2010/0230188 A1 describes a vehicle intended for passenger and goods transport equipped with such a battery system. Another example is given in document US 2002/0125857 A1, which deals with cordless power tools, where an exchangeable battery system is used. However, such battery systems are not suitable for use in mobile construction machines.

The present invention aims primarily to provide an alternative mobile construction machine whereby, according to various preferred embodiments, one or more of the aforementioned and/or other problems are solved. More specifically, the invention seeks, among other things, to enable the practical and/or efficient use of electric motors in mobile construction machines.

To this end the invention, according to a first independent aspect hereof, provides a mobile construction machine wherein the mobile construction machine comprises an electric motor as well as a battery system for powering the electric motor, characterised in that the battery system comprises at least two battery packs which are individually exchangeable and rechargeable. This feature offers more possibilities for better organising the replacement and/or charging process of the battery system of the mobile construction machine and for using electric motors in mobile construction machines in more practical and/or efficient ways. The use of at least two battery packs, which can be exchanged and recharged independently of one another, allows the individual battery packs to be smaller and/or more compact compared to a battery pack only intended to be used alone, with the result that battery packs can be replaced more quickly and the mobile machine is non-operational for a shorter period of time. The mobile construction machine can even remain operational while a battery pack is being changed, because the invention makes it possible to use the other battery pack for powering the electric motor, as the battery packs are individually exchangeable and rechargeable.

Preferably, the battery packs are usable individually to power the electric motor of the mobile construction machine. This means that one battery pack can be used separately from the other battery pack to power the electric motor. Hence, it is possible for the construction machine to remain 'active' while one battery pack is being replaced, as the other can then be used to power the electric motor. In this way, the mobile construction machine experiences little or no downtime. The individual usability of the battery packs does not mean that they cannot also work together to power the electric motor of the mobile construction machine.

The mobile construction machine may include a monitor for monitoring the charge level of the battery packs. The monitor is preferably capable of monitoring the individual charge levels of the battery packs. Thus, it can be determined for each battery pack individually whether or not it needs to be recharged and hence whether or not it needs to be changed.

Preferably at least one, and more preferably each, of the battery packs comprises a waterproof box which houses one or more batteries of the respective battery pack. This can ensure the safety of the mobile construction machine. The battery packs may share a watertight box, for example in the sense that one watertight box houses one or more batteries of these battery packs.

The battery system is preferably incorporated into the mobile construction machine.

The electric motor and the battery system are preferably configured in such a way that a retrofit version is possible, for example due to the fact that the electric motor and the battery system can take the place of an internal combustion engine installed in the mobile construction machine and any accessories. This offers the possibility of converting existing construction machines with combustion engines to electric construction machines according to the invention. Such retrofit implementation therefore allows the principles of the invention to be rolled out on a large scale. A minimally invasive method can be chosen in order to retain as many of the original machine parts as possible. However, the invention does not preclude its use in new mobile construction machinery.

Preferably at least one, and more preferably each, of the battery packs is rechargeable by means of renewable energy, such as solar and/or wind energy, and/or hydrogen, and/or hydrozine. The method according to the second, third and/or fourth aspects, the mobile power plant according to the fifth aspect, and/or the apparatus according to the sixth aspect of the invention may be employed for this purpose, with or without the use of a mobile power plant. Because the battery pack in question is charged by means of renewable energy, and/or hydrogen, and/or hydrozine, the invention provides a sustainable solution for the use of an electric motor in mobile construction machines.

At least one, and preferably each, of the battery packs is rechargeable by means of a mobile power plant. The method according to the second, third and/or fourth aspects, the mobile power plant according to the fifth aspect, and/or the apparatus according to the sixth aspect of the invention may be employed for this purpose. One or more advantages of using a mobile power plant for charging a battery system, or parts thereof, in particular an exchangeable and rechargeable battery pack, are explained here, inter alia in the context of the second and other aspects of the invention.

Preferably at least one, and more preferably each, of the battery packs is standardised. Standardisation offers the possibility of using one and the same battery pack in multiple applications, for example in multiple construction machines of different types. The standardised battery pack can then be used as required, e.g. for a machine that requires a charged battery pack at a certain point in time, regardless of the actual type of that machine. Also in the context of the other aspects of this invention, a battery system, or parts thereof, such as a battery pack or battery, is preferably standardised.

The mobile construction machine is preferably entirely electrically driven.

The invention can be advantageously applied to the following mobile construction machines: an excavator, a shovel, an anchor drilling machine, a pile driver and a bulldozer. However, it is not ruled out that the invention will be implemented in other mobile construction machines. The invention can be applied in particular to any type of mobile construction machine.

The charging of a battery system, or parts thereof, by means of a mobile power plant is an inventive idea in itself, separately from the use of the battery system in a mobile construction machine or the fact that the battery system at least consists of exchangeable and rechargeable battery packs. Although a mobile power plant is known per se, for example from document NL1018569, such a power plant has not so far been used for charging a battery system. The present invention, according to an independent second aspect hereof, relates to a method for charging a battery system, characterised in that the battery system, or parts thereof, is charged, wholly or partially, by means of electricity or electrical energy supplied and/or generated by a mobile power plant. This feature allows the battery system to be charged near to where it is to be used, even if there is no electricity grid is available there, as a mobile power plant can be installed close to the "working" zone of the battery system, i.e. the zone where the battery system is to be used. In this way, the battery system, or the apparatus in which the battery system is intended to be used, does not have to be transported over long distances to a location where connection to the electricity grid is possible. This allows extremely quick charging of the battery system. If the battery system uses exchangeable and rechargeable battery packs, discharged battery packs can be exchanged with charged ones very rapidly.

The electricity can be supplied and/or generated by the mobile power plant in various ways, which can be combined as required. A number of preferred ways are explained here, but the invention is not limited to them.

The electricity can, for example, be generated wholly or partially by the mobile power plant from renewable energy sources. In that case, the electricity is, at least in part, so-called green electricity. It therefore provides a sustainable solution for charging a battery system. The renewable energy can be, for example, solar and/or wind energy. Solar and/or wind energy can be converted by the mobile power plant into the required electricity by means of solar panels, windmills and/or wind turbines, as the case may be. Solar panels, windmills and/or wind turbines can be placed, for example, on the mobile power plant, in particular on any container of the mobile power plant.

Another possibility is to generate all or part of the electricity by means of a generator belonging to the mobile power plant. This generator preferably runs on biofuel and, more preferably, exclusively on biofuel. The generator may be located in the mobile power plant, more particularly in any container of the mobile power plant.

A further possibility is for the electricity to be generated wholly or partially by the mobile power plant on the basis of hydrogen and/or hydrozine. This can be done, for example, by using a fuel cell, which converts hydrogen into electricity. The fuel cell may comprise a membrane, which causes hydrogen gas to bond with oxygen gas via a redox reaction, i.e. a reaction in which an electron flow of 2 × H2 + O2 changes into 2 × H2O, with both the H2 and the O2 changing from neutral particles into electrically charged particles, thus releasing ions. The fuel cell may be located in the mobile power plant, more particularly in any container of the mobile power plant. The hydrogen is preferably carried by a hydrogen carrier belonging to the mobile power plant, for example a hydrogen carrier present in the mobile power plant. The hydrogen carrier is preferably of liquid type, which has the advantage that no pressure tanks are required, in contrast to hydrogen gas. The liquid hydrogen carrier preferably comprises hydrozine, as hydrozine can store large quantities of hydrogen safely.

The mobile power plant may be equipped with storage means for the temporary or permanent storage of the electricity supplied and/or generated by the mobile power plant. The electricity can then be stored for example temporarily before it is used to charge the battery system. The storage means may include, for example, one or more batteries or accumulators. If more than one battery or accumulator is used, it is advantageous to implement these batteries or accumulators redundantly, that is to say, if one battery or accumulator needs to be charged, the other can take over the supply.

The mobile power plant may or may not be connected to an electricity grid. If the power plant is connected to the grid, the power plant can supply electricity to the grid, preventing and/or reducing frequency fluctuations and thus providing a more stable grid. With this on-grid solution, electricity can also be supplied from the grid to the mobile power plant, for example, to charge any storage means of the mobile power plant and/or to charge the battery system. If the mobile power plant is not connected to the grid, the mobile power plant can be operated as a standalone and mobile unit.

The mobile power plant may include a movable housing. The housing is preferably a container. The power plant can then be easily transported to the location where it is needed.

Preferably, the mobile power plant has a modular, scalable design, which means, for example, that different power outputs can be realised with the power plant so that battery systems with different outputs, for example, battery systems intended for different applications, can be charged by the power plant.

The battery system preferably includes an exchangeable and rechargeable battery pack. It is particularly advantageous with such a battery system to ensure the rapid supply of a charged unit, so that battery changes can take place quickly. However, the invention is not limited to such a battery system and can also be used, for example, for charging fixed, i.e. non-exchangeable, batteries, such as the fixed batteries in electric vehicles intended for passenger and/or goods transport.

The battery system is preferably intended for use outside the mobile power plant. The battery system may, for example, be intended to be used for powering a mobile construction machine, in particular for powering a mobile construction machine according to the first aspect of the invention. However, it can also be used for applications other than mobile construction machines. The battery system can be used, for example, to power electric vehicles intended for passenger and/or goods transport. Or the battery system can be used to supply power for cordless power tools.

The invention can be implemented particularly advantageously at a construction location such as a building site. At such locations, a good grid connection is often not easily obtained and is sometimes not possible at all. Or it is far too expensive to install a charging facility. The mobile power plant according to the invention offers a solution to these difficulties.

The present invention further relates to the following independent aspects, each of which is an inventive aspect of the invention:
- an independent third aspect, which relates to a method for charging a battery system for a mobile construction machine, characterised in that the battery system is wholly or partially charged by means of electricity generated wholly or partially from renewable energy and/or hydrogen and/or hydrozine; and
- an independent fourth aspect, which relates to a method for charging an exchangeable battery pack, characterised in that the exchangeable battery pack is wholly or partially charged by means of electricity generated from renewable energy and/or hydrogen and/or hydrozine.

These further independent aspects may have one or more features of the second aspect of the invention, without necessarily being limited to the application of a mobile power plant.

The present invention, according to an independent fifth aspect hereof, relates to a mobile power plant, characterised in that this mobile power plant is suitable for use in carrying out a method according to the second, third and/or fourth aspects of the invention, insofar as such method uses a mobile power plant. To this end, this mobile power plant may comprise means for carrying out the steps according to the method of the second, third and/or fourth aspects of the invention.

The present invention further relates, according to an independent sixth aspect hereof, to an apparatus for carrying out construction work, characterised in that this apparatus comprises a mobile power plant according to the fifth aspect of the present invention. This apparatus preferably further comprises a mobile construction machine, more preferably a mobile construction machine according to the first aspect of the invention.

In the context of this invention, a battery system or battery pack may comprise one or more batteries. In the event that the battery system or battery pack comprises more than one battery, these batteries can preferably be used individually, for powering an electric motor for example, with individual use not precluding the batteries from working together.

It should also be noted that one or more distinct features from any aspect of the invention may be combined with one or more distinct features from any other aspect of the invention, provided such combination is not contradictory.

To better illustrate the features of the invention, certain preferred embodiments are described below, as examples that are not to be understood restrictively, with reference to the accompanying drawings, wherein:
- Figure 1 shows a preferred embodiment of a mobile construction machine according to the invention
- Figure 2 shows an enlarged version of that part of Figure 1 indicated by the frame F2
- Figure 3 shows a schematic representation of the exchangeability of the battery packs from Figures 1 and 2
- Figures 4 to 6 show further examples of mobile construction machines according to the invention, and
- Figure 7 shows a preferred embodiment of a mobile power plant according to the invention.

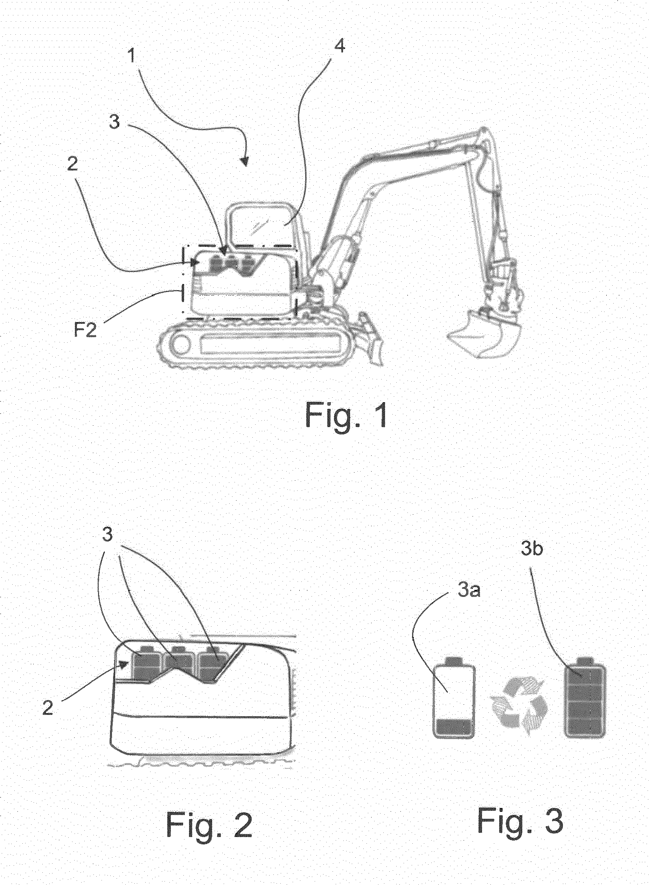

Figure 1 shows a mobile construction machine 1 designed according to the invention. The mobile construction machine 1 comprises an electric motor and a battery system 2 for powering the electric motor. The battery system 2 comprises a plurality of battery packs 3. The battery system 2 is incorporated into the mobile construction machine.

The battery system 2 and the battery packs 3 are shown enlarged in Figure 2. The battery packs 3 are individually exchangeable and rechargeable. This means that each battery pack 3, independently of the other battery packs 3, can be exchanged with a new, different battery pack 3 and be charged. In other words, a battery pack 3 does not need to be exchanged and charged together with the other battery packs 3.

Figure 3 schematically shows the individual exchangeability of battery packs 3a and 3b. The discharged battery pack 3a can be individually exchanged with a new, charged battery pack 3b and recharged. The exchange of the discharged battery pack 3a with the charged battery pack 3b is schematically indicated by the arrows in Figure 3. Once the discharged battery pack 3a has been recharged, it can be used again to power the electric motor of the mobile construction machine 1 and, to this end, it can be exchanged with another, discharged battery pack.

The battery packs 3 can, in particular, be used individually to power the electric motor of the mobile construction machine 1. This means that each battery pack 3 can be used independently of the other battery packs 3 to power the electric motor. From this it follows that the electric motor of the mobile construction machine 1 can be powered continuously while a battery pack 3 is being exchanged, in particular because one or more of the other battery packs 3 still present in the mobile construction machine 1 can be used to power the electric motor. The battery packs 3, which are present in the mobile construction machine 1, preferably work together to power the electric motor of the mobile construction machine 1.

The mobile construction includes, in particular, a monitor for monitoring the charge level of the battery packs 3. The monitor is preferably located in the driver's cab 4 of the mobile construction machine 1, in such a way that the driver of the mobile construction machine 1 can observe the charge level of the battery packs 3 while operating the mobile construction machine 1. The monitor is preferably capable of monitoring the individual charge levels of the battery packs 3. In other words, the monitor is preferably able to follow the charge level of each battery pack 3 separately, so that for each battery pack 3 it is possible to see whether that battery pack 3 needs to be changed and charged.

The battery packs 3 are preferably standardised. Standardisation offers the possibility of using the battery packs 3 in multiple applications, for example in multiple construction machines of different types. The standardised battery packs 3 can then be used as required, for example in a machine that requires a charged battery pack at a certain point in time, regardless of the actual type of that machine.

In the example of Figure 1, the mobile construction machine 1 is fully electrically driven. However, the invention is not limited to fully electrically driven construction machines. It can also be used with partially electrically driven construction machines.

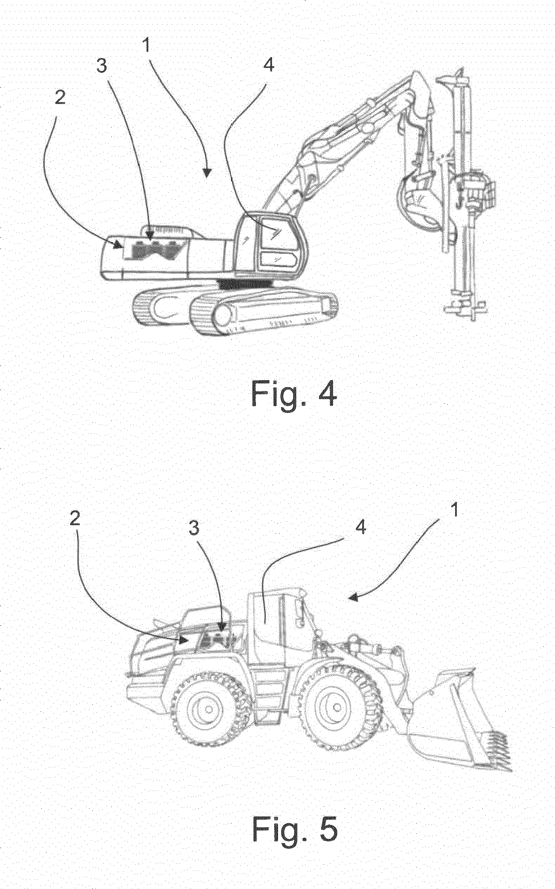

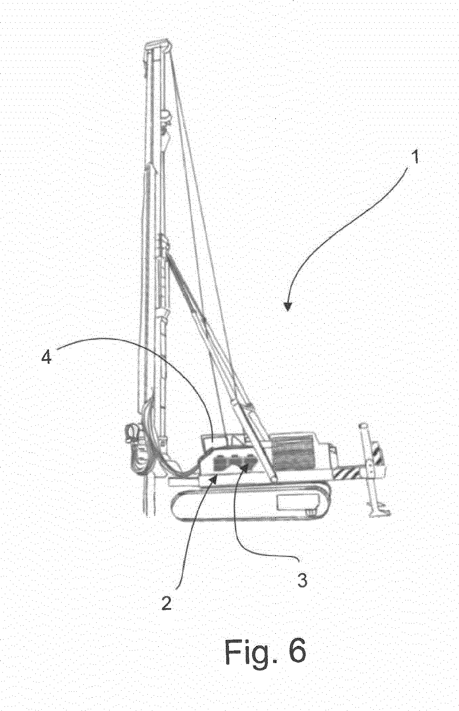

The mobile construction machine 1 in Figure 1 is, in particular, a crane. However, the invention is not limited to this type of construction machine and can be used with any type of mobile construction machine. Other examples of types of mobile construction machines implemented according to the present invention are shown in Figures 4 to 6, these construction machines 1 each having a battery system 2 comprising a plurality of individually exchangeable and rechargeable battery packs 3.

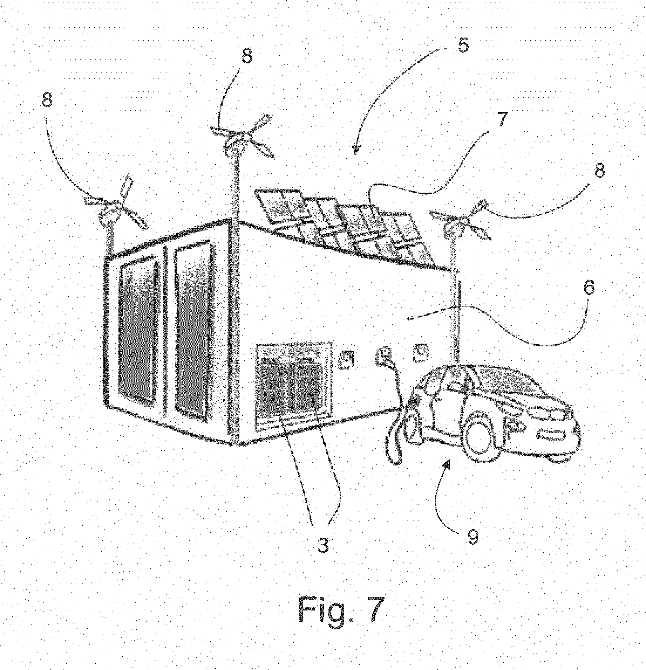

Figure 7 shows a mobile power plant 5 according to the invention. The battery packs 3 of the battery system 2 of the mobile construction machine 1 can be charged with this mobile power plant 5. This mobile power plant 5 may, for example, be part of an apparatus for carrying out construction works, in which case the power plant 5 may be installed in particular at a construction location or building site. The mobile power plant 5 uses the method according to the invention.

The mobile power plant 5 includes a container 6.

As shown in Figure 7, the battery packs 3 are wholly or partially charged by means of electricity which is supplied and/or generated by the mobile power plant 5. This electricity can be wholly or partially generated by the mobile power plant 5 from renewable energy sources, such as solar and/or wind energy. To this end, the mobile power plant 5 may include solar panels 7 and/or wind turbines 8. The solar panels 7 are installed in particular on the roof of the container 6.

The electricity can also be generated wholly or partially by a generator belonging to the mobile power plant 5. This generator is preferably located in the container 6 and is then more preferably surrounded by the walls or panels of the container 6. The generator runs preferably, and more preferably exclusively, on biofuel.

The electricity can further be generated wholly or partially by the mobile power plant 5 on the basis of hydrogen and/or hydrozine. A fuel cell, for example, can be used for this purpose, as explained in this disclosure. The fuel cell may be located in the mobile power plant 5 and preferably in the container 6 of the power plant 5. The fuel cell is then more preferably surrounded by the walls or panels of the container 6. The hydrogen is preferably carried by a hydrogen carrier belonging to the mobile power plant, for example a hydrogen carrier located in the mobile power plant. The hydrogen carrier is preferably of liquid type, which has the advantage that no pressure tanks are required, in contrast to hydrogen gas. The liquid hydrogen carrier preferably comprises hydrozine, as hydrozine can store large quantities of hydrogen safely.

The mobile power plant 5 is preferably equipped with storage means. These storage means are located preferably in the mobile power plant 5 and more preferably in the container 6 of the mobile power plant 5. The storage means can be used for the temporary storage of electricity supplied and/or generated by the mobile power plant 5. The storage means may include, for example, one or more batteries or accumulators. If more than one battery or accumulator is used, it is advantageous to implement these batteries or accumulators redundantly, that is to say, if one battery or accumulator needs to be charged, the other can take over the supply.

The mobile power plant 5 may or may not be connected to the electricity grid.

The mobile power plant 5 may include a switching system for switching between the different energy sources provided by the mobile power plant 5. The switching system may, for example, determine that electricity is to be obtained in the first place from solar energy and, if solar energy is not sufficient, switch to another energy source, such as wind energy or the generator or hydrogen or hydrozine. This switching system can be used in a general manner and is therefore not limited to the specific embodiment of the mobile power plant 5 according to Figure 7. The principle of the switching system can be broadly combined with, for example, the independent aspects of the invention disclosed herein.

The mobile power plant 5 preferably has a modular, scalable design, which means, for example, that different power outputs can be realised with the power plant 5 so that battery systems with different outputs, for example, battery systems intended for different applications, can be charged by the power plant 5.

As described herein, the mobile power plant 5 is used for charging the exchangeable and rechargeable battery packs 3. However, the mobile power plant 5 in Figure 7 can also be used for other applications. For example, the mobile power plant 5 can be used to charge a battery system of an electric vehicle 9 intended for passenger and/or goods transport. In that case the battery system may include, for example, a fixed, i.e. non-exchangeable, battery, as shown in Figure 7.

The present invention may also concern one of the following preferred embodiments, or a combination thereof. These preferred embodiments are referred to as items. The reference numbers included therein are not restrictive but merely illustrative.
- 1.- Method for charging a battery system, characterised in that the battery system is wholly or partially charged by means of electricity which is supplied and/or generated by a mobile power plant (5).
- 2.- Method according to item 1, wherein the power is generated wholly or partially by the mobile power plant (5) from renewable energy sources such as solar and/or wind energy.
- 3.- Method according to item 1 or 2, wherein the power is generated wholly or partially by a generator belonging to the mobile power plant (5), which generator preferably, and more preferably exclusively, runs on biofuel.
- 4.- Method according to any of the preceding items, wherein the electricity is generated wholly or partially by the mobile power plant (5) on the basis of hydrogen and/or hydrozine.
- 5.- Method according to item 4, wherein the electricity is generated wholly or partially by the mobile power plant (5) on the basis of hydrogen; and wherein the hydrogen is carried by a hydrogen carrier belonging to the mobile power plant (5), said hydrogen carrier preferably comprising a liquid hydrogen carrier, and more preferably hydrozine.
- 6.- Method according to any of the preceding items, wherein the mobile power plant (5) is provided with storage means for the temporary or permanent storage of the electricity supplied and/or generated by the mobile power plant (5).
- 7.- Method according to any of the preceding items, wherein the mobile power plant (5) is or is not be connected to an electricity grid.
- 8.- Method according to any of the preceding items, wherein the mobile power plant (5) comprises a movable housing, which housing preferably comprises a container (6).
- 9.- Method according to any of the preceding items, wherein the mobile power plant (5) has a modular, scalable design.
- 10.- Method according to any of the preceding items, wherein the battery system (2) comprises an exchangeable and rechargeable battery pack (3).
- 11.- Method according to any of the preceding items, wherein the battery system (2), and/or the exchangeable and rechargeable battery pack (3) of item 10, is standardised.
- 12.- Method according to any of the preceding items, wherein the battery system (2) is intended to be used outside the mobile power plant (5).
- 13.- Method according to any of the preceding items, wherein the battery system (2) is intended to be used for powering a mobile construction machine, in particular a mobile construction machine (1) according to any of items 20 to 30.
- 14.- Method according to any of the preceding items, wherein the method is carried out at a construction location such as a building site.
- 15.- Method for charging a battery system for a mobile construction machine, characterised in that the battery system (2) is wholly or partially charged by means of electricity generated wholly or partially from renewable energy and/or hydrogen and/or hydrozine.
- 16.- Method for charging an exchangeable and rechargeable battery pack, characterised in that the battery pack (3) is wholly or partially charged by means of electricity generated wholly or partially from renewable energy and/or hydrogen and/or hydrozine.
- 17.- Method according to item 15 or 16, such method having one or more features of the method according to any of items 1 to 14, without this method necessarily being limited to the application of a mobile power plant (5).
- 18.- Mobile power plant, characterised in that the mobile power plant (5) is suitable for use in a method according to any of items 1 to 17, insofar as a mobile power plant (5) is used in such a method; and that this mobile power plant (5) preferably comprises means for carrying out the steps of the method according to any of items 1 to 17.
- 19.- Apparatus for carrying out construction work, characterised in that this apparatus comprises a mobile power plant (5) according to item 18; and that this apparatus preferably further comprises a mobile construction machine, more preferably a mobile construction machine (1) according to any of items 20 to 30.
- 20.- Mobile construction machine, wherein the mobile construction machine (1) comprises an electric motor and a battery system (2) for powering the electric motor, characterised in that the battery system (2) comprises at least two battery packs (3) that are individually exchangeable and rechargeable.
- 21.- Mobile construction machine according to item 20, wherein the battery packs (3) are usable individually to power the electric motor of the mobile construction machine (1).
- 22.- Mobile construction machine according to item 20 or 21, wherein the mobile construction machine (1) includes a monitor for monitoring the charge level of the battery packs (3); and wherein the monitor is preferably capable of monitoring the individual charge levels of the battery packs (3).
- 23.- Mobile construction machine according to any of items 20 to 22, wherein at least one, and preferably each, of the battery packs (3) comprises a watertight box which houses one or more batteries of the battery pack concerned (3).
- 24.- Mobile construction machine according to any of items 20 to 23, wherein the battery system (2) is incorporated into the mobile construction machine (1).
- 25.- Mobile construction machine according to any of items 20 to 24, wherein the electric motor and the battery system (2) are configured in such a way that a retrofit version is possible, for example due to the fact that the electric motor and the battery system (2) can take the place of an internal combustion engine installed in the mobile construction machine (1) and any accessories.
- 26.- Mobile construction machine according to any of items 20 to 25, wherein at least one, and preferably each, of the battery packs (3) is wholly or partially rechargeable by means of renewable energy, such as solar and/or wind power, and/or hydrogen, and/or hydrozine.
- 27.- Mobile construction machine according to any of items 20 to 26, wherein at least one, and preferably each, of the battery packs (3) is rechargeable by means of a mobile power plant (5).
- 28.- Mobile construction machine according to any of items 20 to 27, wherein at least one, and preferably each, of the battery packs (3) is standardised.
- 29.- Mobile construction machine according to any of items 20 to 28, wherein the mobile construction machine (1) is fully electrically driven.
- 30.- Mobile construction machine according to any of items 20 to 29, wherein the mobile construction machine (1) is a machine selected from the following group: an excavator, a shovel, an anchor drilling machine, a pile driver and a bulldozer.

The present invention is in no way limited to the embodiments described above, but such construction machines, methods, power plants and apparatus may be realised according to different variants without going beyond the scope of the present invention.

## Claims

1. Method for charging a battery system, **characterised in that** the battery system (2) is wholly or partially charged by means of electricity which is supplied and/or generated by a mobile power plant (5).

2. Method according to claim 1, wherein the electricity is generated wholly or partially by the mobile power plant (5) from renewable energy sources such as solar and/or wind energy.

3. Method according to claim 1 or 2, wherein the electricity is generated wholly or partially by a generator belonging to the mobile power plant (5), which generator preferably, and more preferably exclusively, runs on biofuel.

4. Method according to any of the preceding claims, wherein the electricity is generated wholly or partially by the mobile power plant (5) on the basis of hydrogen and/or hydrozine.

5. Method according to claim 4, wherein the electricity is generated wholly or partially by the mobile power plant (5) on the basis of hydrogen; and wherein the hydrogen is carried by a hydrogen carrier belonging to the mobile power plant (5), said hydrogen carrier preferably comprising a liquid hydrogen carrier, and more preferably hydrozine.

6. Method according to any of the preceding claims, wherein the mobile power plant (5) is provided with storage means for the temporary or permanent storage of the electricity supplied and/or generated by the mobile power plant (5).

7. Method according to any of the preceding claims, wherein the mobile power plant (5) is or is not connected to an electricity grid.

8. Method according to any of the preceding claims, wherein the mobile power plant (5) comprises a movable housing, which housing preferably comprises a container (6).

9. Method according to any of the preceding claims, wherein the mobile power plant (5) has a modular, scalable design.

10. Method according to any of the preceding claims, wherein the battery system (2) comprises an exchangeable and rechargeable battery pack (3).

11. Method according to any of the preceding claims, wherein the battery system (2), and/or the exchangeable and rechargeable battery pack (3) of claim 10, is standardised.

12. Method according to any of the preceding claims, wherein the battery system (2) is intended to be used outside the mobile power plant (5).

13. Method according to any of the preceding claims, wherein the battery system (2) is intended to be used for powering a mobile construction machine, in particular a mobile construction machine (1) according to any of claims 20 to 30.

14. Method according to any of the preceding claims, wherein the method is carried out at a construction location such as a building site.

15. Mobile construction machine, wherein the mobile construction machine (1) comprises an electric motor and a battery system (2) for powering the electric motor, **characterised in that** the battery system (2) comprises at least two battery packs (3) that are individually exchangeable and rechargeable, wherein the battery packs (3) are preferably usable individually to power the electric motor of the mobile construction machine (1).
